# DEMANDE DE BREVET EUROPEEN

(11) **EP 1 308 425 A2**
(43) Date de publication de la demande: **07.05.2003**
(21) Numéro de dépôt: 02292712.3
(22) Date de dépôt: 30.10.2002
(51) Int. Cl.: C03C 17/30, C09K 3/18

(54) **Composition hydrofuge, lave-glace à effet anti-pluie la contenant notamment pour pare-brise de véhicule**

(30) Priorité: 31.10.2001 FR 0114137
(71) Demandeur: Dehon S.A., 75011 Paris (FR)
(72) Inventeur: Abidh, Gérard, 77680 Roissy en Brie (FR); Levasseur, Laurent, 92290 Chatenay Malabry (FR); Le, Patrick, 69150 Decines (FR)
(74) Mandataire: David, Daniel

(57) **Abrégé**

La composition hydrofuge notamment pour liquide lave-glace, comprend un composé de type organo-polysiloxane, en tant qu'agent actif hydrophone, et un solvant.

Selon l'invention, elle est associée à un mélange solubilisant comprenant : au moins un éther alcool en tant que solvant tiers, un tensionactif siliconé non ionique et un tensioactif cationique.

## Description

La présente invention se rapporte au domaine des substances liquides de type anti-pluie destinées à être appliquées sur des surfaces lisses et qui ont pour fonction d'éviter que les liquides aqueux n'y adhèrent. Elle vise notamment les substances liquides appliquées sur le pare brise des véhicules pour éviter que l'eau de pluie ne vienne gêner la vision.

On connaît des produits avec lesquels on traite principalement les surfaces en verre pour éviter que l'eau n'y adhère. En les rendant hydrophobes, ils empêchent la formation d'une pellicule d'eau continue. L'eau qui est projetée sur une telle surface se rassemble sous la forme de gouttelettes. Ces dernières sont en position instable et sont entraînées facilement par leur poids si la surface n'est pas horizontale ou bien par l'air en mouvement relatif par rapport à celle-ci. Ainsi, ces produits sont utiles lorsqu'ils sont appliqués sur le pare-brise des véhicules. Ils permettent de conserver une bonne vision au travers des ces derniers en cas de pluie. On les désigne parfois par les termes « rain repellent ».

Une composition hydrofuge connue par le brevet FR 2782522 comprend :
un agent actif hydrophobe qui est un composé de type organopolysiloxane et
un solvant qui est un composé organique de la famille comprenant les alcools, les cétones, les éthers, les acétals et les éther alcools.

Un agent actif particulier est un fluide silicone comprenant une fonction amino réactive et notamment une aminoéthylaminopropylpolysiloxane. Cette dernière est disponible dans le commerce sous l'appellation SF 1706 par la société General Electric silicones.

Le solvant est en particulier l'alcool propylique. Ces deux composants sont dans une proportion de 80 à 99% de solvant pour 1 à 20% d'agent hydrophobe. Une application commerciale vendue sous l'appellation Protène 53 par la société Atochem comprend une aminoéthylaminopropylpolysiloxane solubilisée à 5% dans l'isopropanol.

La composition comprend éventuellement des additifs en faibles quantités que l'on retrouve habituellement dans les produits anti-pluie. Par exemple on peut ajouter une essence de parfum ou bien un stabilisant.

Cette composition présente toutes les propriétés habituellement requises d'un liquide anti-pluie : son indice de réfraction est favorable, elle n'est pas agressive vis à vis des matières auxquelles elle est susceptible d'être appliquée, sa toxicité est faible ; enfin elle présente une bonne stabilité au stockage notamment dans les réservoirs sous pression et ce dans une large gamme de température allant de -55°C à 80°C.

Comme cela est décrit dans le brevet FR 2782522, un mode d'utilisation de cette composition hydrofuge consiste à la projeter sous la forme d'un aérosol. On la conditionne dans ce but, dans un récipient mis sous pression avec un gaz inerte comme l'azote. Pour sa mise en oeuvre, on pulvérise le produit sur la surface à traiter et on l'étale avec un chiffon pour obtenir l'effet anti-pluie.

En tant que variante de mise en oeuvre, le brevet mentionne la possibilité d'ajouter cette composition au produit utilisé comme lave-glace dans les automobiles. Le produit lave-glace est lui-même constitué en majorité d'eau.

Il apparaît, toutefois, que si on ajoute plus de 10% d'eau à la composition hydrofuge, l'agent actif hydrofuge se sépare du reste de la composition. Il se forme une émulsion qui n'est pas utilisable. Cette composition n'est en fait pas soluble dans les milieux non alcooliques.

La présente invention vise donc à résoudre ce problème et a pour objet une composition hydrofuge anti-pluie comprenant au moins un composé de type organo-polysiloxane qui peut être ajouté à un liquide aqueux sans risquer de former une émulsion. On vise en particulier un liquide aqueux alcoolisé, tel qu'un liquide lave-glace.

On réalise cet objectif avec une composition comprenant un composé de type organo-polysiloxane en tant qu'agent actif hydrophobe et un solvant caractérisée par le fait qu'elle est associée à un mélange solubilisant comprenant :
au moins un solvant tiers constitué d'un éther alcool,
un tensioactif siliconé non ionique tel qu'un méthylpolysiloxane polyalkylène oxyde modifié, et
un tensioactif cationique.

Un produit présentant une telle composition peut être mis en solution dans l'eau de manière à constituer une préparation contenant plus de 50% d'eau.

Conformément à une autre caractéristique de l'invention la composition est caractérisée par le fait que l'éther alcool est un éther de glycol sur base propylénique de point éclair inférieur à 100°C. En particulier il s'agit du mono propylène glycol monoéthyléther.

Conformément à une autre caractéristique l'agent tensioactif non ionique est un polysiloxane. En particulier, il s'agit d'un diméthyl polysiloxane polyalkylène oxyde modifié.

Conformément à une autre caractéristique, l'agent tensioactif cationique comprend de l'ammonium quaternaire. Il comprend aussi de l'imidazoline cationique.

L'invention a également pour objet un produit lave-glace prêt à l'emploi comprenant un alcool ou un mélange d'alcools avec de l'eau. Ce produit comprend également une composition selon au moins l'une des caractéristiques mentionnées ci-dessus.

En particulier un tel produit lave-glace comprend
de 0,01 % à 10% dudit solvant tiers et de préférence de 1 à 1,5 %
de 0,001 % à 3 % dudit tensioactif non ionique
de 0,01 % à 0,5 % dudit tensioactif cationique.
de 0,01 % à1 % de l'agent hydrophobe
de 1% à 50% d'alcool
de l'eau QSP.

L'invention a également pour objet un procédé de préparation d'un produit lave-glace selon la revendication précédente, caractérisé par le fait que l'on mélange au préalable l'agent hydrophobe au dit alcool ou audit mélange d'alcools, on ajoute ensuite séparément les composés du dit mélange solubilisant et on complète avec de l'eau. Eventuellement, on peut ajouter d'autres agents.

On écrit ci-après plus en détail un mode de réalisation de l'invention

Un produit lave-glace comprend classiquement de l'eau, un mélange d'alcools ainsi que des additifs. Selon les produits, on trouve de 50% à 100% d'eau, de 1% à 50% d'alcools et une faible partie d'additifs, inférieure à 20%.

Le mélange d'alcools est généralement composé d'isopropanol avec de l'éthanol dans des proportions très variables, de 0 à 100%.

Les additifs éventuels sont des agents stabilisants, solubilisants et dégraissants.

Pour associer une propriété anti-pluie au produit lave-glace ci-dessus, on y solubilise conformément à l'invention un agent hydrofuge au moyen d'un mélange solubilisant.

L'agent hydrophobe est un composé de type organo-polysiloxane. Selon le mode de réalisation préféré, il s'agit d'une aminoéthylaminopropylpolysiloxane, commercialisée par la société GE Silicones sous la dénomination SF 1706. Celle-ci est vendue en solution dans 5 % d'isopropanol sous la dénomination Protène 53 par la société Atochem.

Le mélange solubilisant comprend :
a) Un ou plusieurs co-solvants. Ils sont de type éther de glycol sur une base propylénique de point éclair inférieur à 100°C. Un solvant préféré est le mono propylène glycol monoéthyléther. La quantité est suffisante pour que le produit lave-glace prêt à l'emploi en contienne de 0,01 % à 10 %. De préférence la concentration est comprise en 1 et 5 %. En effet en dessous de 1% l'effet solubilisant du mélange est plus faible. Et au-delà de 10 % la vitre traitée prend un aspect gras.
b) Un agent tensioactif siliconé de type polysiloxane. L'agent sélectionné répond à certaines conditions. Il est soluble en toutes proportions dans un alcool tel que l'isopropanol ou l'éthanol. Il présente aussi une aptitude à se disperser ou à se solubiliser dans l'eau. Les copolymères à base d'oxyde d'éthylène seuls ou mixtes, à base d'éthylène et d'oxyde de propylène, mais non les copolymères d'oxyde de propylène seuls, satisfont à ces conditions. Un produit particulier est un heptaméthyltrisiloxane polyalkylène oxyde modifié. Il est vendu dans le commerce sous la marque Silwet L 77 par la Société Witco.
   L'agent tensioactif siliconé est incorporé au mélange dans une quantité suffisante pour que le produit lave-glace en contienne une proportion de 0,001 % à 3%. En effet une concentration allant au-delà de 3% entraîne un effet gras sur la surface traitée.
c) Un agent tensioactif cationique. Celui-ci consiste en une combinaison de tensioactifs cationiques comprenant de l'imidazoline cationique à chaînes carbonées C20-C22 et de l'ammonium quaternaire, en l'espèce du dialkyl- et du diméthyl d'ammonium. Ces tensioactifs cationiques sont hydrophobes et « anti- extrait sec ». C'est-à-dire qu'ils ont une action « démouillante » visant à chasser l'eau de la surface sur laquelle ils sont appliqués.

On a utilisé en particulier un produit vendu sous la dénomination Autopoon GK 4004 par Zschimmer et Schwartz.

La concentration dans le mélange final reste inférieure à 0,5%, au-delà des dépôts gras apparaissent sur la surface vitrée traitée. Elle est supérieure à 0,01 %.

On prépare un produit lave-glace, conforme à l'invention, dont la composition finale est la suivante.

| | |
|---|---|
| 1. Mélange d'alcools éthanol et/ou isopropanol | 29% |
| 2. Protène PM 53 | 5% |
| 3. Monopropylène glycol monoéthyléther | 1% |
| 4. Silwet L 77 | 0,005% |
| 5. Autopoon GK 4004 | 0,01% |
| 6. Eau | QSP |

On prépare un premier mélange 1-2 avec l'agent hydrophobe Protène PM 53 et les alcools du produit lave-glace. L'isopropanol et l'éthanol peuvent être choisis dans des proportions relatives allant de 0 à 100%.

L'agent hydrophobe est par nature parfaitement soluble dans les alcools.

On incorpore ensuite séparément les composés du mélange solubilisant dans le premier mélange 1-2, dans l'ordre 3, 4, 5. On attend environ 10 minutes avant de compléter avec l'eau.

Eventuellement on ajoute en cours de préparation un agent améliorant l'aspect final du produit.

Le produit ainsi préparé se présente sous la forme d'un liquide clair sans dépôt ni émulsion.

On l'a appliqué sur un pare brise par l'intermédiaire d'un dispositif lave-glace d'un véhicule. La vision à travers la vitre n'est pas affectée par une forte pluie sur le pare brise jusqu'à une vitesse de 50 km/h sans que l'on ait à mettre en action les essuie glaces.

On a décrit un produit lave-glace prêt à l'emploi. L'invention comprend aussi la préparation d'un produit lave-glace que l'on doit compléter en y incorporant de l'eau. L'invention comprend aussi un mélange anti-pluie composé de l'agent hydrophobe et du mélange solubilisant prêt à être dilué directement dans l'eau.

## Revendications

1. Composition hydrofuge anti-pluie, susceptible d'être incorporée dans un liquide lave-glace, comprenant un composé de type organopolysiloxane, en tant qu'agent actif hydrophobe, et un solvant, **caractérisée par le fait qu'**elle est associée à un mélange solubilisant comprenant : au moins un éther alcool en tant que solvant tiers, un tensioactif siliconé non ionique et un tensioactif cationique.

2. Composition selon la revendication précédente **caractérisée par le fait que** l'éther alcool est un éther de glycol sur base propylénique de point éclair inférieur à 100 °C.

3. Composition selon la revendication précédente, **caractérisée par le fait que** l'éther de glycol est le mono propylène glycol monoéthyléther.

4. Composition selon l'une des revendications précédentes, **caractérisée par le fait que** l'agent tensioactif non ionique est un polysiloxane.

5. Composition selon la revendication précédente, **caractérisée par le fait que** l'agent tensioactif non ionique est un diméthyl polysiloxane polyalkylène oxyde modifié.

6. Composition selon l'une des revendications précédentes, **caractérisée par le fait que** l'agent tensioactif cationique comprend de l'ammonium quaternaire.

7. Composition selon la revendication précédente, **caractérisée par le fait que** l'agent tensioactif cationique comprend de l'imidazoline cationique.

8. Composition selon l'une des revendications précédentes, **caractérisée par le fait que** le composé de type organo-polysiloxane est une aminoéthyl-aminopropylsiloxane.

9. Composition lave-glace comprenant de l'eau et au moins un alcool, **caractérisée par le fait qu'**elle comprend également une composition selon l'une des revendications précédentes.

10. Composition selon la revendication précédente, **caractérisée par le fait qu'**elle comprend :
de 0,01 % à 10 % dudit solvant tiers et de préférence de 1 à 1,5 %
de 0,001 % à 3 % dudit tensioactif non ionique
de 0,001 % à 0,5 % dudit tensioactif cationique
de 0,01 % à 1 % de l'agent hydrophobe
de 1 % à 50 % d'alcool.

11. Procédé de préparation d'une composition lave-glace selon la revendication précédente, **caractérisé par le fait qu'**il comprend les étapes suivantes :
- on introduit dans un alcool ou un mélange d'alcools une composition comprenant ledit composé de type organopolysiloxane en solution dans un solvant,
- on ajoute les composés dudit mélange solubilisant,
- on complète avec de l'eau.
